# EUROPEAN PATENT APPLICATION

(11) **EP 4 803 854 A1**
(43) Date of publication of application: **09.09.2026**
(21) Application number: 24887255.8
(22) Date of filing: 15.03.2024
(51) Int. Cl.: G01B 11/00

(54) **ELECTRODE SHEET TEST METHOD AND SYSTEM**

(30) Priority: 09.11.2023 CN 202311484017
(71) Applicant: Contemporary Amperex Technology Co., Limited, Ningde, Fujian 352100 (CN)
(72) Inventor: WU, Kai, Ningde, Fujian 352100 (CN); PENG, Ke, Ningde, Fujian 352100 (CN); LIN, Wenfa, Ningde, Fujian 352100 (CN); WU, Yongjiang, Ningde, Fujian 352100 (CN); GAO, Hangtian, Ningde, Fujian 352100 (CN); LUO, Weijie, Ningde, Fujian 352100 (CN)
(74) Representative: Ziebig Hengelhaupt Intellectual Property Attorneys Patentanwaltskanzlei PartGmbB
(86) International application number: PCT/CN2024/081875
(87) International publication number: WO 2025/097629

(57) **Abstract**

The embodiments of the present disclosure provide an electrode sheet test method and system, applicable to a camera system. The method comprises: before an electrode sheet is wound, obtaining a first image of a first surface of the electrode sheet and a second image of a second surface of the electrode sheet, the first image and the second image being acquired by an image acquisition element; on the basis of the first image, determining a size parameter of a test target on the first surface in the electrode sheet, and, on the basis of the second image, determining a size parameter of the test target on the second surface in the electrode sheet, the test target comprising at least a calibration block corresponding to the electrode sheet, and the calibration block being used for determining whether the image acquisition element has been offset; and, on the basis of the size parameter on the first surface and the size parameter on the second surface, determining a test result for the electrode sheet.

## Description

### CROSS-REFERENCE TO RELATED APPLICATION

The present disclosure is presented based on Chinese Patent Application No. 202311484017.4, filed on November 09, 2023 and entitled "ELECTRODE PLATE DETECTION METHOD AND SYSTEM", and claims priority to the Chinese Patent Application, the content of which is incorporated herein by reference in its entirety.

### TECHNICAL FIELD

Embodiments of the present disclosure relate to the technical field of battery detection, and relate to, but are not limited to, an electrode plate detection method and a system.

### BACKGROUND

New energy batteries are increasingly widely used in life and industry. For example, new energy vehicles equipped with batteries have been widely used. In addition, batteries are also increasingly used in the field of energy storage.

In the related art, when the electrode plate alignment degree of the cell electrode plates is detected, the relative positions of the film regions of the positive and negative electrode plates are acquired only by a charge coupled device (CCD) camera before winding, so as to ensure that the edges of the positive and negative electrode plates are effectively aligned when the electrode plates are wound.

However, since the edge of the positive electrode plate is provided with an inorganic separation material, the active regions on the front and back surfaces of the positive electrode plate are misaligned to a certain extent. In the related art, only the edges of the positive and negative electrode plates are aligned, and consequently the alignment of the active regions of the positive and negative electrode plates cannot be ensured.

### SUMMARY

In order to solve the problems in the related art, embodiments of the present disclosure provide an electrode plate detection method and a system, which can effectively ensure that a negative electrode plate covers an active region of a positive electrode plate, thereby reducing the problem of unusable cells due to the alignment degree of the active region.

In a first aspect, the present disclosure provides an electrode plate detection method, applied to a camera system. The electrode plate detection method includes: obtaining, before an electrode plate is wound, a first image of a first surface of the electrode plate and a second image of a second surface of the electrode plate that are acquired by an image acquisition element; determining, according to the first image, a dimensional parameter of a detection target in the electrode plate on a first surface, and determining, according to the second image, a dimensional parameter of a detection target in the electrode plate on a second surface, where the detection target at least includes a calibration block corresponding to an electrode plate, and the calibration block is configured to determine whether the image acquisition element is offset; and determining, based on the dimensional parameter of the first surface and the dimensional parameter of the second surface, a detection result of the electrode plate.

In the above embodiments, by obtaining the images of the first surface and the second surface of the electrode plate, the dimensional parameters of the detection target of the electrode plate on the first surface and the second surface are determined, and the consistency of the detection target on the front and back surfaces of the electrode plate is monitored based on the dimensional parameters of the detection target on the first surface and the second surface, thereby reducing the problem of misalignment of the detection target on the front and back surfaces of the electrode plate. In this way, the alignment degree of the detection target on the front and back surfaces of the electrode plate is ensured on the basis that edges of positive and negative electrode plates are aligned, such that the negative electrode plate can cover an active region of the positive electrode plate when the electrode plates are wound, thereby reducing the case of unusable cells due to the misalignment of detection targets of positive and negative electrodes, more accurately monitoring the alignment degree of the positive and negative electrode plates during winding, and ensuring the yield and use safety of the cell.

In some embodiments, the detection target further includes a coating of the electrode plate; determining, according to the first image, the dimensional parameter of the detection target in the electrode plate on the first surface, and determining, according to the second image, the dimensional parameter of the detection target in the electrode plate on the second surface includes: determining, according to the first image, a coating width of the coating on the first surface; and determining, based on the second image, a coating width of the coating on the second surface; correspondingly, determining, based on the dimensional parameter of the first surface and the dimensional parameter of the second surface, the detection result of the electrode plate includes: determining, based on the coating width of the first surface and the coating width of the second surface, a coating width difference of the coating between the first surface and the second surface; and comparing the coating width difference with a target difference threshold to obtain an alignment degree result of the coating on the first surface and the second surface.

In some embodiments, comparing the coating width difference with the target difference threshold to obtain the alignment degree result of the coating on the first surface and the second surface includes: generating, in response to the coating width difference being greater than or equal to the target difference threshold, a first alignment degree result indicating that the electrode plate does not satisfy an alignment degree condition; and generating, in response to the coating width difference being less than the target difference threshold, a second alignment degree result indicating that the electrode plate satisfies the alignment degree condition.

In the above embodiments, by performing consistency monitoring on the detection target at edges of the front and back surfaces of the electrode plate, the problem of misalignment of the active regions on two surfaces of the electrode plate is reduced. Therefore, during the winding process of the electrode plate, it is effectively ensured that the negative electrode plate can cover the active region of the positive electrode plate, thereby reducing cell yield problems caused by misalignment of the active regions.

In some embodiments, the image acquisition element includes a first image acquisition element for acquiring the first image and a second image acquisition element for acquiring the second image; determining, according to the first image, the dimensional parameter of the detection target in the electrode plate on the first surface, and determining, according to the second image, the dimensional parameter of the detection target in the electrode plate on the second surface includes: determining, according to the first image, a calibration width of the calibration block on the first surface, and determining, according to the second image, a calibration width of the calibration block on the second surface; correspondingly, the method further includes: determining a difference between the calibration width of the first surface and a standard width of the calibration block and a difference between the calibration width of the second surface and the standard width of the calibration block, separately, to obtain a first calibration difference and a second calibration difference; and comparing the first calibration difference and the second calibration difference with a calibration difference threshold, separately, to obtain an offset result of the first image acquisition element and an offset result of the second image acquisition element.

In the above embodiments, before the electrode plate is detected, the position of the image acquisition element in a camera system is corrected, such that when the electrode plate is detected, detection errors caused by the offset of the image acquisition element do not occur. This prevents inaccurate detection results, prevents electrode plates that cannot be wound from entering the winding process, and reduces the problem of a low cell yield after winding, thereby improving the cell yield.

In some embodiments, determining, according to the first image, the dimensional parameter of the detection target in the electrode plate on the first surface, and determining, according to the second image, the dimensional parameter of the detection target in the electrode plate on the second surface includes: determining, according to the first image and the second image, a first defect on the first surface, a second defect on the second surface, an area of the first defect, and an area of the second defect; correspondingly, determining, based on the dimensional parameter of the first surface and the dimensional parameter of the second surface, the detection result of the electrode plate includes: generating, in response to the area of the first defect and/or the area of the second defect being greater than a defect area threshold, a detection result indicating that the electrode plate has a defect; and generating, in response to both the area of the first defect and the area of the second defect being less than or equal to the defect area threshold, a detection result indicating that the electrode plate is capable of being wound.

In the above embodiments, the defects on two surfaces of the electrode plate are detected, thereby reducing the entry of defective electrode plates into the winding process, ensuring that the cells are all produced from qualified materials, and improving the cell yield.

In some embodiments, the method further includes: determining, according to the first image or the second image, a vertical distance between an electrode plate boundary and a reference point; and generating, in response to a difference between the vertical distance and a standard distance being greater than a distance threshold, an electrode plate offset result indicating that the electrode plate is offset from an electrode plate conveying direction.

In the above embodiments, before the electrode plate enters the winding process, not only the alignment degree of the active regions on two surfaces of the electrode plate is detected, but also the traveling direction of the electrode plate is detected, thereby reducing the problem that due to the lateral offset of the electrode plate during conveying, the alignment degree of the positive and negative electrode plates is unqualified, and improving the winding yield of the cell.

In some embodiments, obtaining the first image of the first surface of the electrode plate and the second image of the second surface of the electrode plate that are acquired by the image acquisition element includes: obtaining, in response to a trigger signal sent by a controller, the first image of the first surface of the electrode plate and the second image of the second surface of the electrode plate that are acquired by the image acquisition element; and the electrode plate detection method further includes: sending the detection result of the electrode plate to the controller.

In a second aspect, the present disclosure provides an electrode plate detection system. The electrode plate detection system at least includes a camera system. The camera system includes: an image acquisition element, configured to acquire, before an electrode plate is wound, a first image of a first surface of the electrode plate and a second image of a second surface of the electrode plate; and a processor, connected to the image acquisition element, where the processor is configured to determine, according to the first image, a dimensional parameter of a detection target in the electrode plate on a first surface, and determine, according to the second image, a dimensional parameter of a detection target in the electrode plate on a second surface, where the detection target at least includes a calibration block corresponding to an electrode plate, and the calibration block is configured to determine whether the image acquisition element is offset; and determine, based on the dimensional parameter of the first surface and the dimensional parameter of the second surface, a detection result of the electrode plate.

In the above embodiments, the electrode plate detection system determines, by obtaining the images of the first surface and the second surface of the electrode plate, the dimensional parameters of the detection target of the electrode plate on the first surface and the second surface, and monitors, based on the dimensional parameters of the detection target on the first surface and the second surface, the consistency of the detection target on the front and back surfaces of the electrode plate, thereby reducing the problem of misalignment of the detection target on the front and back surfaces of the electrode plate. In this way, the alignment degree of the detection target on the front and back surfaces of the electrode plate is ensured on the basis that edges of positive and negative electrode plates are aligned, thereby reducing the case of unusable cells due to the misalignment of detection targets of positive and negative electrodes when the electrode plates are wound, more accurately monitoring the alignment degree of the positive and negative electrode plates during winding, and ensuring the yield and use safety of the cell.

In some embodiments, the electrode plate detection system further includes: a mounting frame, configured to mount a first image acquisition element and a second image acquisition element, where in a conveying direction perpendicular to the electrode plate, the first image acquisition element and the second image acquisition element are disposed on two sides of the electrode plate, respectively; a first light source and a second light source, providing illumination for the electrode plate; a first support, disposed between the first image acquisition element and the first surface; and a second support, disposed between the second image acquisition element and the second surface, where a field-of-view hole of the first support corresponds to a field-of-view hole of the second support, and a first image acquisition element and a second image acquisition element perform image acquisition on the electrode plate through the field-of-view hole to obtain a first image and the second image.

In the above embodiments, the light sources are disposed at the two image acquisition elements, respectively, to illuminate the field of view of the electrode plate in the field-of-view holes, thereby ensuring uniform and consistent imaging brightness of the camera, improving the imaging quality, and reducing false detections and missed detections.

In some embodiments, the electrode plate detection system further includes: calibration blocks disposed on the first support and the second support, respectively.

In the above embodiments, the processor can determine, based on the calibration block, the dimensional parameter of the detection target and the size of a defect on the electrode plate, thereby improving the detection precision.

In some embodiments, the electrode plate detection system further includes: a controller, the controller being electrically connected to the processor and being configured to: send, in response to the electrode plate winding machine starting to operate, a trigger signal to a camera system, receive a detection result of an electrode plate sent by the camera system, and send the detection result of the electrode plate to the electrode plate winding machine; and the electrode plate winding machine, electrically connected to the controller and configured to perform, in response to the detection result, one of the following processes on the electrode plate: winding, reinspection, and scrapping.

The above description is only an overview of the technical solutions of the present application. To more clearly understand the technical means of the present disclosure to enable implementation in accordance with the content of the specification and to make the above and other purposes, features, and advantages of the present disclosure more obvious and easy to understand, the detailed description of the present disclosure is provided below.

### BRIEF DESCRIPTION OF THE DRAWINGS

FIG. 1 is an optional schematic flowchart of an electrode plate detection method according to an embodiment of the present disclosure;
FIG. 2 is a schematic diagram of a traveling process of an electrode plate according to an embodiment of the present disclosure;
FIG. 3 is a first schematic structural diagram of an electrode plate detection system according to an embodiment of the present disclosure;
FIG. 4 is a second schematic structural diagram of an electrode plate detection system according to an embodiment of the present disclosure;
FIG. 5 is a third schematic structural diagram of an electrode plate detection system according to an embodiment of the present disclosure;
FIG. 6 is a schematic diagram of an edge detection principle according to an embodiment of the present disclosure;
FIG. 7 is a schematic flowchart of an electrode plate edge detection method according to an embodiment of the present disclosure; and
FIG. 8 is a schematic flowchart of a camera detection method according to an embodiment of the present disclosure.

### Description of the reference numerals:

201-electrode plate to be detected; 2011-target to be detected; L-width of a detection target; 301-camera system; 3011-image acquisition element; 3012-processor; 302-electrode plate; 3021-detection target; 401-mounting frame; 402-first light source; 403-second light source; 404-first support; 405-second support; 406-first image acquisition element; 407-second image acquisition element; 408-field-of-view hole; 409-calibration block; 501-L-shaped support; 502-camera; 503-calibration block structure; 504-light source; 505-hard reference support; 506-support field-of-view hole; 601-positive electrode plate; 6011-inorganic insulating layer; 602-acquisition camera; 603-algorithmic edge capture frame.

### DETAILED DESCRIPTION

To make the objectives, technical solutions, and advantages of the present disclosure clearer, the present disclosure will be further described in detail below with reference to the accompanying drawings. The described embodiments should not be considered as limitations to the present disclosure, and all other embodiments obtained by those of ordinary skill in the art without creative efforts shall fall within the protection scope of the present disclosure.

In the following description, reference is made to "some embodiments", which describe a subset of all possible embodiments, but it can be understood that "some embodiments" may be the same subset or different subsets of all possible embodiments and may be combined with each other without conflict. Unless otherwise defined, all technical and scientific terms used in the embodiments of the present disclosure have the same meaning as commonly understood by those skilled in the art to which the embodiments of the present disclosure belong. The terms used in the embodiments of the present disclosure are for the purpose of describing the embodiments of the present disclosure only and are not intended to limit the present disclosure.

At present, new energy batteries are increasingly applied in life and industry. New energy batteries are not only applied in energy storage power systems such as hydropower, thermal power, wind power, and solar power stations, but are also widely applied in electric transportation vehicles such as electric bicycles, electric motorcycles, and electric vehicles, as well as in aerospace and other fields. With the continuous expansion of the application field of power batteries, the market demand for power batteries is also constantly increasing.

In the embodiments of the present disclosure, the battery may be a battery cell (also known as a cell), or the battery may be a battery module or a battery pack including a plurality of battery cells. The battery cell refers to a basic unit that can realize the mutual conversion between chemical energy and electric energy. It can be used for making battery modules or battery packs to supply power to electric devices. The battery cell may be a secondary battery, which refers to a battery cell that can continue to be used by activating the active material through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

In the production process of a wound battery, a laser-cut electrode plate needs to be wound, by the rotation of a winding mandrel, into a wound core shape that is wrapped layer by layer. The typical wrapping method involves overlapping a separator, a positive electrode, a separator, and a negative electrode in sequence, and then winding them together, such that the separator and the electrode plate are jointly wound to form a cell wound body. The separator serves to separate the positive electrode from the negative electrode, preventing internal short circuits of the battery and allowing electrolyte ions to pass freely, thereby completing the electrochemical charging and discharging process.

To form a qualified cell during winding, active regions of positive and negative electrode plates need to be aligned before winding to form a qualified cell. In the related art, the relative positions of film regions of the positive and negative electrode plates are acquired only by a CCD camera, so as to ensure that edges of the positive and negative electrode plates are effectively aligned when the electrode plates are wound. However, since metal burrs are likely to occur at the edge of the positive electrode plate of the lithium battery after die cutting, when the burrs pierce the separator, direct conduction with the negative electrode plate will be caused, which may lead to risks such as fire and explosion of the lithium battery. Therefore, in order to reduce such problems, the edge of the positive electrode plate is coated with a layer of inorganic separation material with a width of 1 to 3 millimeters (mm). Due to errors in the coating process, the active regions on the front and back surfaces of the positive electrode plate may be misaligned to a certain extent, resulting in an unqualified front-to-back alignment degree of the active regions of the positive and negative electrode plates, and thus failing to produce a qualified cell.

In order to solve the problem that the front-to-back alignment degree of the active regions of the positive and negative electrode plates is unqualified during the winding process, the applicants of the present disclosure have conducted in-depth studies and found that the active regions on two sides of the positive electrode plate can be monitored before winding. If the active regions on two sides of the positive electrode plate are misaligned, the electrode plate is processed, and the electrode plate with the misalignment problem does not enter the winding process, so as to reduce the problem of insufficient performance of the wound cell.

Based on the above considerations, an embodiment of the present disclosure provides an electrode plate detection method. By obtaining images of a first surface and a second surface of an electrode plate that are acquired by an image acquisition element, dimensional parameters of a detection target of the electrode plate on the first surface and the second surface are determined, and the consistency of the detection target on the front and back surfaces of the electrode plate is monitored based on the dimensional parameters of the detection target on the first surface and the second surface, thereby reducing the problem of misalignment of the detection target on the front and back surfaces of the electrode plate. In this way, the alignment degree of the detection target on the front and back surfaces of the electrode plate is ensured on the basis that edges of positive and negative electrode plates are aligned, thereby reducing the case of unusable cells due to the misalignment of detection targets of positive and negative electrodes when the electrode plates are wound, more accurately monitoring the alignment degree of the positive and negative electrode plates during winding, and ensuring the yield and use safety of the cell.

The electrode plate detection method according to the embodiment of the present disclosure is applied before the positive and negative electrode plates are wound to form a cell. The electrode plate detection method is implemented by an electrode plate detection system at least including a camera system. The electrode plate detection method according to the embodiment of the present disclosure is implemented using the camera system in the electrode plate detection system as an execution body.

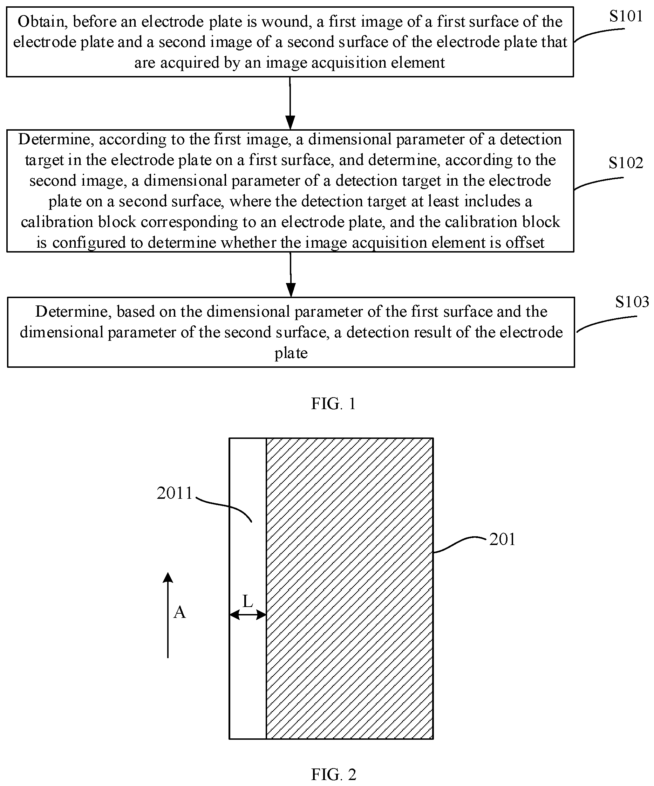

FIG. 1 is an optional schematic flowchart of an electrode plate detection method according to an embodiment of the present disclosure. As shown in FIG. 1, the electrode plate detection method according to the embodiment of the present disclosure may be implemented by step S101 to step S103.

In step S101, before an electrode plate is wound, a first image of a first surface of the electrode plate and a second image of a second surface of the electrode plate that are acquired by an image acquisition element are obtained.

The electrode plate detection method according to the embodiment of the present disclosure is applied to the traveling electrode plate before the electrode plate is wound; that is, before the electrode plate enters a winding station. The embodiment of the present disclosure implements the electrode plate detection method by a camera system in an electrode plate detection system. The camera system at least includes the image acquisition element and a processor. The image acquisition element may be a CCD camera, and the processor is connected to the image acquisition element. The image acquisition element is configured to acquire the images of the first surface of the electrode plate and the second surface of the electrode plate. The processor stores a memory having processor-executable instructions. When the instructions are executed by the processor, the electrode plate detection method according to the embodiment of the present disclosure is implemented.

In some embodiments, the electrode plate detection system further includes a controller connected to the camera system. The controller may refer to one of a programmable logic controller (PLC), an intermediate computer, an upper computer, and a single-chip microcomputer. The camera system responds to an electrode plate detection operation on the controller, and the image acquisition element performs image acquisition on the first surface of the electrode plate and the second surface of the electrode plate to obtain the first image and the second image.

In some embodiments, the image acquisition element may perform image acquisition on the first surface and the second surface of the electrode plate in real time, or at intervals of a period of time, for example, acquiring the first image and the second image every 5 seconds to obtain a plurality of first images and a plurality of second images during the traveling of the electrode plate.

In some embodiments, the electrode plate may refer to a positive electrode plate and a negative electrode plate of a battery, where an edge of the positive electrode plate is provided with an insulating coating layer. Performing the electrode plate detection on two sides of the positive electrode plate can determine whether active regions on two sides of the positive electrode are misaligned, and performing the electrode plate detection on two sides of the negative electrode plate can determine whether the negative electrode plate has a defect.

In step S102, a dimensional parameter of a detection target in the electrode plate on the first surface is determined according to the first image, and a dimensional parameter of a detection target in the electrode plate on the second surface is determined according to the second image, where the detection target at least includes a calibration block corresponding to the electrode plate, and the calibration block is configured to determine whether the image acquisition element is offset.

In some embodiments, the detection target at least includes a coating of the electrode plate on the first surface and the second surface, and the coating may refer to an insulating region on the edges of the first surface and the second surface of the electrode plate. Determining the dimensional parameter of the detection target may refer to detecting the width of the insulating region. The width direction of the insulating region is perpendicular to the traveling direction of the electrode plate. FIG. 2 is a schematic diagram of a traveling process of an electrode plate according to an embodiment of the present disclosure. As shown in FIG. 2, an image of one surface of an electrode plate to be detected is shown, the electrode plate to be detected 201 advances in a direction A, and a target to be detected 2011 is on the electrode plate to be detected 201. A dimensional parameter of the target to be detected 2011 may be determined based on the image; that is, the width L of the detection target.

In some embodiments, the detection target may also be a defect on the electrode plate, and the dimensional parameter of the defect on the electrode plate is determined through the image to determine whether the electrode plate can be wound.

Here, determining the dimensional parameter of the detection target according to the image may be implemented through the processor of the camera system. The processor identifies the first image and the second image to determine the dimensional parameters of the detection target on the first surface and the second surface, respectively.

In some embodiments, the first surface and the second surface of the electrode plate may each correspond to one fixed calibration block, and the calibration blocks on the two surfaces are of the same size. When the image acquisition element acquires the images of the first surface and the second surface, whether the image acquisition element is offset may be determined according to whether the calibration blocks in the two images are deformed, so as to ensure the accuracy of the image acquired by the image acquisition element and improve the detection precision.

In step S103, a detection result of the electrode plate is determined based on the dimensional parameter of the first surface and the dimensional parameter of the second surface.

In some embodiments, when the detection target is the width of the insulating coating layer, the detection result of the electrode plate may be determined based on the width comparison of the coating on the two surfaces. For example, if the difference between the coating width on the first surface and the coating width on the second surface is large, it indicates that the misalignment of the active regions on the two surfaces of the electrode plate is large, and when the electrode plate enters the winding process, the active regions of the positive and negative electrode plates cannot be aligned. Therefore, the detection result is that the electrode plate does not satisfy an alignment degree condition. If the difference between the coating width on the first surface and the coating width on the second surface is small, it indicates that the misalignment of the active regions on the two surfaces of the electrode plate is within an error range, and when the electrode plate enters the winding process, the active regions of the positive and negative electrode plates will not fail to align. Therefore, the detection result is that the electrode plate satisfies the alignment degree condition.

In some embodiments, when the detection target is a defect on the electrode plate, whether the electrode plate can be wound is determined according to the dimensional parameter of the defect. For example, when a defect size on the electrode plate is less than a defect threshold size, the detection result is that the electrode plate can be wound; when the defect size on the electrode plate is greater than the defect threshold size, the detection result is that the electrode plate cannot be wound.

An embodiment of the present disclosure provides an electrode plate detection method. By obtaining the images of the first surface and the second surface of the electrode plate, the dimensional parameters of the detection target of the electrode plate on the first surface and the second surface are determined, and the consistency of the detection target on the front and back surfaces of the electrode plate is monitored based on the dimensional parameters of the detection target on the first surface and the second surface, thereby reducing the problem of misalignment of the detection target on the front and back surfaces of the electrode plate. In this way, the alignment degree of the detection target on the front and back surfaces of the electrode plate is ensured on the basis that edges of positive and negative electrode plates are aligned, such that the negative electrode plate can cover an active region of the positive electrode plate when the electrode plates are wound, thereby reducing the case of unusable cells due to the misalignment of detection targets of positive and negative electrodes, more accurately monitoring the alignment degree of the positive and negative electrode plates during winding, and ensuring the yield and use safety of the cell.

In some embodiments, the detection target further includes a coating of the electrode plate on the first surface and the second surface. The coating may refer to an insulating region on the edges of the first surface and the second surface of the electrode plate; that is, the insulating region is detected. If the widths of the insulating regions on the two surfaces are the same, the electrode plate may enter the winding process. The coating may also refer to an active region on the first surface and the second surface of the electrode plate. If the widths of the active regions are the same and the distances between the active regions on the two surfaces and the edges are the same, the electrode plate may enter the winding process. Based on the foregoing embodiments, step S102 may be implemented by step S1021 to step S1022.

In step S1021, a coating width of the coating on the first surface is determined according to the first image.

In step S1022, a coating width of the coating on the second surface is determined based on the second image.

In the embodiments of the present disclosure, the processor may determine the coating widths of the coating on the first surface and the second surface by identifying the first image and the second image.

### Correspondingly, step S103 may be implemented by step S1031 to step S1032.

In step S1031, a coating width difference of the coating between the first surface and the second surface is determined based on the coating width of the first surface and the coating width of the second surface.

In some embodiments, the coating width difference refers to the difference between the coating widths on the two surfaces of the electrode plate, and is used to indicate whether the coatings on the two surfaces are misaligned, thereby indicating whether the active regions on the two surfaces of the electrode plate are misaligned.

In step S1032, the coating width difference is compared with a target difference threshold to obtain an alignment degree result of the coating on the first surface and the second surface.

In some embodiments, the target difference threshold may be set by technical personnel, and may be 0.2 millimeters (mm). In response to the coating width difference being greater than or equal to the target difference threshold, a first alignment degree result indicating that the electrode plate does not satisfy an alignment degree condition is generated, where the alignment degree condition means that the coating width difference is less than the target difference threshold. When the coating width difference is less than the target difference threshold, a second alignment degree result indicating that the electrode plate satisfies the alignment degree condition is generated.

In the embodiments of the present disclosure, by performing consistency monitoring on the detection target at edges of the front and back surfaces of the electrode plate, the problem of misalignment of the active regions on two surfaces of the electrode plate is reduced. Therefore, during the winding process of the electrode plate, it is effectively ensured that the negative electrode plate can cover the active region of the positive electrode plate, thereby reducing cell yield problems caused by misalignment of the active regions.

In some embodiments, the image acquisition element in the camera system includes a first image acquisition element for acquiring the image of the first surface of the electrode plate and a second image acquisition element for acquiring the image of the second surface of the electrode plate. The first surface and the second surface of the electrode plate each correspond to one fixed calibration block, the calibration blocks on the two surfaces are of the same size, and the calibration blocks are used to calculate the coating widths on the first surface and the second surface of the electrode plate. Based on the foregoing embodiments, step S102 may also be implemented by step S1.

In step S1, a calibration width of the calibration block on the first surface is determined according to the first image, and a calibration width of the calibration block on the second surface is determined according to the second image.

In some embodiments, the electrode plate detection system further includes a mounting frame for mounting the image acquisition element, and the image acquisition element includes a first image acquisition element for acquiring the image of the first surface and a second image acquisition element for acquiring the image of the second surface. The mounting frame is provided with a first support and a second support, the first support is disposed between the first image acquisition element and the first surface, and the second support is disposed between the second image acquisition element and the second surface. The first support and the second support are provided with the same calibration block, and the calibration block is located between the support and the image acquisition element. The calibration block may be a cube with a length, width, and height of 1 mm, and may calibrate whether the first image acquisition element and the second image acquisition element are offset on the mounting frame.

In the embodiments of the present disclosure, the direction of the calibration width may also be perpendicular to the traveling direction of the electrode plate. When the first image and the second image are acquired, an image containing the calibration block is acquired. The processor identifies the first image and the second image, separately, thereby obtaining the calibration width of the calibration block on the first image and the calibration width of the calibration block on the second image.

Correspondingly, since the calibration blocks corresponding to the two surfaces of the electrode plate are the same, before the coating widths of the two surfaces of the electrode plate are detected, whether the two image acquisition elements are offset may be determined based on the calibration widths of the calibration blocks in the first image and the second image acquired by the two image acquisition elements. The electrode plate detection method according to the embodiment of the present disclosure further includes step S2 and step S3.

In step S2, a difference between the calibration width of the first surface and a standard width of the calibration block and a difference between the calibration width of the second surface and the standard width of the calibration block are determined, separately, to obtain a first calibration difference and a second calibration difference.

In some embodiments, the standard width of the calibration block is fixed, for example, 1 mm. After the calibration width of the calibration block on the first surface and the calibration width of the calibration block on the second surface are determined, the first calibration difference between the calibration width of the first surface and the standard width and the second calibration difference between the calibration width of the second surface and the standard width may be determined.

In step S3, the first calibration difference and the second calibration difference are compared with a calibration difference threshold, separately, to obtain an offset result of the first image acquisition element and an offset result of the second image acquisition element.

In some embodiments, the calibration difference threshold may also be set by technical personnel, for example, 0.1 mm, and the first calibration difference is compared with the calibration difference threshold. If the first calibration difference is less than the calibration difference threshold, it indicates that the offset of the first image acquisition element is within the error range, and the offset does not cause a large error when dimensional parameter identification is performed on the detection target, thereby obtaining an offset result indicating that the first image acquisition element satisfies an offset condition. If the first calibration difference is greater than or equal to the calibration difference threshold, it indicates that the offset of the first image acquisition element is large, and the offset may cause a large error when dimensional parameter identification is performed on the detection target, thereby obtaining an offset result indicating that the first image acquisition element does not satisfy the offset condition. In this case, the camera system may issue a prompt to prompt an engineer to correct the position of the first image acquisition element until the first calibration difference is less than the calibration difference threshold.

In some embodiments, the offset result of the second image acquisition element is determined in the same way as the first image acquisition element, which will not be repeated here.

In the embodiments of the present disclosure, before the electrode plate is detected, the position of the image acquisition element in the camera system is corrected, such that when the electrode plate is detected, detection errors caused by the offset of the image acquisition element do not occur. This prevents inaccurate detection results, prevents electrode plates that cannot be wound from entering the winding process, and reduces the problem of a low cell yield after winding, thereby improving the cell yield.

In some embodiments, whether the electrode plate has defects such as wrinkles or damage may also be determined by means of the acquired first image and second image, and whether the electrode plate can be wound is determined based on the detection result. Based on the foregoing embodiments, step S102 may also be implemented by step S4.

In step S4, a first defect on the first surface of the electrode plate, a second defect on the second surface of the electrode plate, an area of the first defect, and an area of the second defect are determined according to the first image and the second image.

In some embodiments, the processor identifies the first image and the second image to determine the defects on the first surface and the second surface of the electrode plate and the areas of the defects, and the areas may be determined by pixel points of the defects on the images.

Correspondingly, step S103 may also be implemented by step S5 and step S6.

In step S5, a detection result indicating that the electrode plate has a defect is generated in response to the area of the first defect and/or the area of the second defect being greater than a defect area threshold.

In step S6, a detection result indicating that the electrode plate is capable of being wound is generated in response to both the area of the first defect and the area of the second defect being less than or equal to the defect area threshold.

In the embodiments of the present disclosure, the defect area threshold may be set by technical personnel. For example, the defect area threshold is 1 square millimeter. Each surface of the electrode plate may include at least one defect. If the area of at least one defect of the first defect on the first surface or the second defect on the second surface of the electrode plate is greater than the defect area threshold, it indicates that the electrode plate has a defect, and the processor generates a detection result indicating that the electrode plate has a defect. If both the area of the first defect on the first surface and the area of the second defect on the second surface of the electrode plate are less than or equal to the defect area threshold, it indicates that the defects on the electrode plate are within the error range, the cell obtained after the electrode plate is wound is usable, and in this case, the processor generates a detection result indicating that the electrode plate is capable of being wound.

In the embodiments of the present disclosure, the defects on two surfaces of the electrode plate are detected, thereby reducing the entry of defective electrode plates into the winding process, ensuring that the cells are all produced from qualified materials, and improving the cell yield.

In some embodiments, whether the electrode plate is offset during traveling may also be determined by means of the acquired first image and second image. If the offset exceeds an offset threshold, the positive and negative electrode plates cannot be aligned when the electrode plates are wound, and the offset electrode plate needs to be processed. Based on the foregoing embodiments, the electrode plate detection method according to the embodiment of the present disclosure further includes step S7 and step S8.

In step S7, a vertical distance between an electrode plate boundary and a reference point is determined according to the first image or the second image.

In some embodiments, the reference point may be a fixed point on the mounting frame, and the reference point is used to measure whether the electrode plate has lateral offset during the traveling of the electrode plate. If the distance between the boundary and the reference point remains unchanged all the time during the traveling of the electrode plate, it indicates that the electrode plate does not have lateral offset during traveling.

The first image or the second image obtained by the processor has the reference point, and the vertical distance may be obtained by the processor identifying one of the first image or the second image.

In step S8, an electrode plate offset result indicating that the electrode plate is offset from an electrode plate conveying direction is generated in response to a difference between the vertical distance and a standard distance being greater than a distance threshold.

Here, the standard distance may refer to the vertical distance between the electrode plate boundary and the reference point when the electrode plate is not offset. The first image or the second image is acquired by the image acquisition element in real time or at intervals of a period of time. Therefore, the processor determines the vertical distance between the electrode plate boundary and the reference point in real time or at intervals of a period of time, determines, according to the vertical distance and the standard distance, the lateral offset value of the electrode plate in the traveling process, i.e., the difference between the vertical distance and the standard distance, and compares the difference with a preset distance threshold to determine the electrode plate offset result indicating that the electrode plate is offset from the electrode plate conveying direction (i.e., the traveling direction of the electrode plate).

In some embodiments, the preset distance threshold may be 0.5 mm. When the difference is less than 0.5 mm, it indicates that the lateral offset of the electrode plate is within the error range. When the difference is greater than or equal to 0.5 mm, it indicates that the lateral offset of the electrode plate is large, and in this case, the device needs to be debugged to adjust the traveling direction of the electrode plate.

In the embodiments of the present disclosure, before the electrode plate enters the winding process, not only the alignment degree of the active regions on two surfaces of the electrode plate is detected, but also the traveling direction of the electrode plate is detected, thereby reducing the problem that due to the lateral offset of the electrode plate during conveying, the alignment degree of the positive and negative electrode plates is unqualified, and improving the winding yield of the cell.

In some embodiments, the camera system acquires, based on a trigger signal of the controller in the electrode plate detection system, the images of two surfaces of the electrode plate. After the camera system detects the electrode plate by the electrode plate detection method according to the embodiment of the present disclosure to obtain the detection result, the detection result of the electrode plate is sent to the controller. Here, the controller may refer to one of a PLC, an intermediate computer, an upper computer, and a single-chip microcomputer.

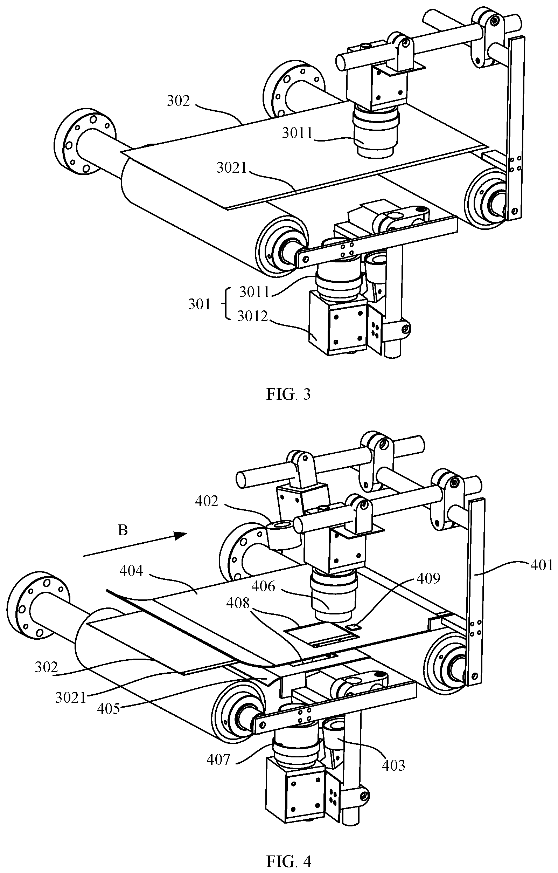

Next, the present disclosure provides an electrode plate detection system for performing the above electrode plate detection method. FIG. 3 is a schematic structural diagram of an electrode plate detection system according to an embodiment of the present disclosure. As shown in FIG. 3, the electrode plate detection system. The electrode plate detection system at least includes a camera system 301. The camera system 301 includes an image acquisition element 3011 and a processor 3012. The image acquisition element 3011 is configured to acquire, before an electrode plate 302 is wound, a first image of a first surface of the electrode plate 302 and a second image of a second surface of the electrode plate 302. The processor 3012 is connected to the image acquisition element 3011, and the processor 3012 is configured to obtain the first image of the first surface and the second image of the second surface of the electrode plate 302; determine, according to the first image, a dimensional parameter of a detection target 3021 in the electrode plate 302 on the first surface, and determine, according to the second image, a dimensional parameter of the detection target 3021 in the electrode plate 302 on the second surface; and determine, based on the dimensional parameter of the first surface and the dimensional parameter of the second surface, a detection result of the electrode plate 302.

In the embodiments of the present disclosure, the image acquisition element may be a CCD camera.

Based on the foregoing embodiments, FIG. 4 is a schematic structural diagram of an electrode plate detection system according to an embodiment of the present disclosure. As shown in FIG. 4, the electrode plate detection system further includes a mounting frame 401, a first light source 402, a second light source 403, a first support 404, and a second support 405. The image acquisition element is divided into a first image acquisition element 406 and a second image acquisition element 407.

The mounting frame 401 is configured to mount the first image acquisition element 406 and the second image acquisition element 407. In a conveying direction B perpendicular to the electrode plate 302, the first image acquisition element 406 and the second image acquisition element 407 are disposed on two sides of the electrode plate 302, respectively, to acquire the first image of the first surface and the second image of the second surface of the electrode plate 302, respectively.

The first light source 402 and the second light source 403 are disposed on the mounting frame 401. The first light source 402 is disposed on one side of the first image acquisition element 406 on the mounting frame 401 and provides illumination for the first image acquisition element 406 to acquire the image of the electrode plate 302. The second light source 403 is disposed on one side of the second image acquisition element 407 on the mounting frame 401 and provides illumination for the second image acquisition element 407 to acquire the image of the electrode plate 302.

The first support 404 is disposed between the first image acquisition element 406 and the first surface of the electrode plate 302. The second support 405 is disposed between the second image acquisition element 407 and the second surface of the electrode plate 302. The first support 404 and the second support 405 are each provided with a field-of-view hole 408, and the field-of-view hole 408 of the first support 404 corresponds to the field-of-view hole 408 of the second support 405; that is, in a direction perpendicular to the electrode plate 302, projections of the two field-of-view holes 408 coincide.

In the embodiments of the present disclosure, the first image acquisition element 406 and the second image acquisition element 407 perform image acquisition on the electrode plate 302 through the field-of-view hole 408 to obtain the first image and the second image.

With continued reference to FIG. 4, the electrode plate detection system further includes calibration blocks 409, and the calibration blocks 409 are disposed on the first support 404 and the second support 405, respectively. The calibration block 409 is configured to provide a standard distance, such that the processor determines, based on the calibration block 409, the dimensional parameter of the detection target and the size of a defect on the electrode plate.

In some embodiments, the electrode plate detection system further includes a controller and an electrode plate winding machine.

The controller is electrically connected to the processor, and is configured to send, in response to the electrode plate winding machine starting to operate, a trigger signal to the camera system, such that the camera system performs the above electrode plate detection method to obtain a detection result. The controller is further configured to receive the detection result of the electrode plate sent by the camera system, and send the detection result of the electrode plate to the electrode plate winding machine.

The electrode plate winding machine is electrically connected to the controller and configured to perform, in response to the detection result, one of the following processes on the electrode plate: winding, reinspection, and scrapping. Here, if the detection result of the electrode plate satisfies the winding condition, the electrode plate winding machine winds the electrode plate; if the detection result indicates that the electrode plate needs to be reinspected, the electrode plate winding machine sends the electrode plate to an X-ray device, and the electrode plate is reinspected through the X-ray device; and if the detection result indicates that the electrode plate has a large defect, does not satisfy the winding condition, and does not need to be reinspected, the electrode plate winding machine performs the scrapping process on the electrode plate.

In the electrode plate detection system according to the embodiment of the present disclosure, in a first aspect, the detection targets on the front and back surfaces of the electrode plate can be monitored, such that the interference from an inorganic insulating layer region at the edge of the electrode plate can be greatly eliminated, and the alignment degree of the positive and negative electrode plates can be more accurately monitored, thereby ensuring the safety of the cell. In a second aspect, the camera precision is monitored through the calibration block, such that the normal operation of the device in the production process is ensured, and false detections and missed detections of the electrode plate detection system are effectively reduced.

An exemplary application of the embodiments of the present disclosure in a practical application scenario will be described below.

Based on the means for detecting the alignment degree of the electrode plates in the related art, the relative positions of film regions of the positive and negative electrode plates are acquired only before the electrode plates are wound, so as to ensure the effective alignment of the positive and negative electrode plates. However, due to the presence of an inorganic separation material with a width of 1 mm to 3 mm at the edge of the positive electrode plate, there is a certain degree of misalignment between the active regions on the front and back surfaces of the electrode plate, resulting in the problem of a not good (NG) front-to-back alignment degree between the active regions of positive and negative electrodes. Moreover, the electrode plate winding machine is in long-term production, and due to loose screws or accidental contact by operators, camera loosening may occur, which causes detection distortion, resulting in problems of false detections and missed detections.

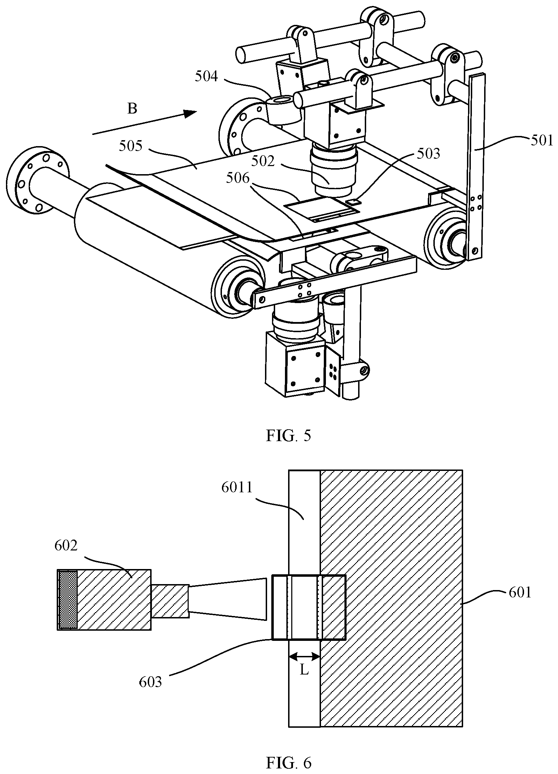

An embodiment of the present disclosure provides a detection system. FIG. 5 is a schematic structural diagram of an electrode plate detection system according to an embodiment of the present disclosure. As shown in FIG. 5, the detection system at least includes an L-shaped support 501, a camera 502, a calibration block structure 503, a light source 504, a hard reference support 505, and a support field-of-view hole 506.

The L-shaped support 501 is fixed on an electrode plate transport station prior to an electrode plate winding machine station. The camera 502, the calibration block structure 503, and the light source 504 are fixed on the L-shaped support 501, and the camera 502 is fixed at a position 70 mm away from the electrode plate. On the L-shaped support 501, one camera 502 is mounted on each of the front and back surfaces of the electrode plate to take an image of one side of the positive electrode plate. The hard reference support 505 is mounted between the camera 502 and the electrode plate, a lens acquires an electrode plate image through the support field-of-view hole 506 on the hard reference support 505, and the support field-of-view hole 506 is provided with the calibration block structure 503. The two light sources 504 are located behind the camera 502 and illuminate the field of view of the electrode plate in the support field-of-view hole 506, separately, thereby ensuring uniform and consistent imaging brightness of the camera 502 and reducing false detections and missed detections.

An embodiment of the present disclosure provides an electrode plate detection method. The cameras on the front and back surfaces of the electrode plate detection system take an image of the inorganic insulating layer (i.e., the detection target) at the edge of the positive electrode plate, thereby ensuring that the misalignment of the film regions on the front and back surfaces of the electrode plate is within a qualified limit. FIG. 6 is a schematic diagram of an edge detection principle according to an embodiment of the present disclosure. As shown in FIG. 6, during the cell winding process, alignment degree information of inorganic insulating layers 6011 on the front and back surfaces of the edge of a positive electrode plate 601 is acquired in real time by an acquisition camera 602, and a distance L (width) between the inorganic insulating layer 6011 and a film region boundary edge and an outer side edge is calculated by an algorithmic edge capture frame 603. By comparing a width difference |Δ1| between the inorganic insulating layers 6011 on the front and back surfaces of the positive electrode plate 601, when |Δ1| < 0.2 mm, the electrode plate normally enters the electrode plate winding machine for production; and when |Δ1| ≥ 0.2 mm, the electrode plate is regarded as NG. When the electrode plate meets the alignment degree specification, the electrode plate enters the electrode plate winding machine, and the wound cell flows out normally. The electrode plate that does not meet the alignment degree specification is scrapped or marked and sent to X-Ray (i.e., X-ray device) for reinspection.

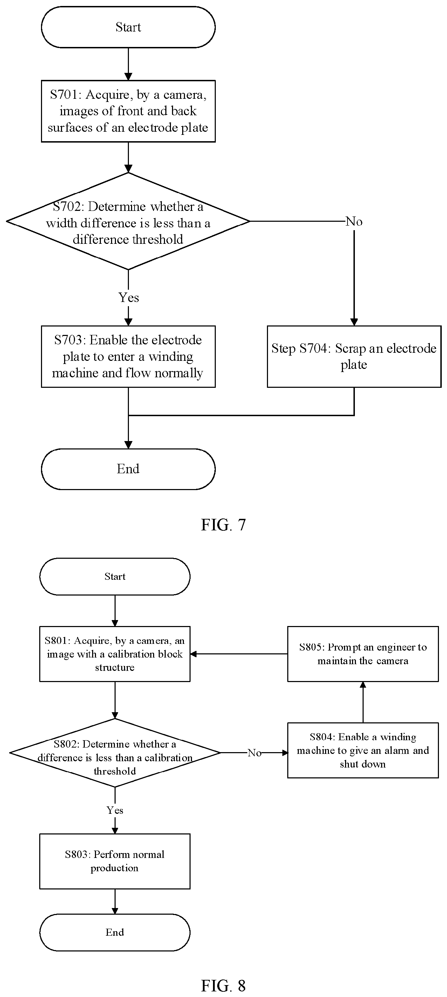

FIG. 7 is a schematic flowchart of an electrode plate edge detection method according to an embodiment of the present disclosure. As shown in FIG. 7, the electrode plate edge detection method is implemented by step S701 to step S704.

In step S701, a camera acquires images of front and back surfaces of an electrode plate.

After the camera acquires the images of the front and back surfaces of the electrode plate, the widths of the inorganic insulating layers on the images of the front and back surfaces of the electrode plate are identified to obtain a width difference between the inorganic insulating layers on the front and back surfaces.

In step S702, whether the width difference is less than a difference threshold is determined.

In the embodiments of the present disclosure, if the width difference is less than or equal to the difference threshold, step S703 is performed; and if the width difference is greater than the difference threshold, step S704 is performed.

In step S703, the electrode plate enters the electrode plate winding machine and flows normally.

In the embodiments of the present disclosure, if the width difference is less than or equal to the difference threshold, the electrode plate enters the electrode plate winding machine and flows normally.

In step S704, the electrode plate is scrapped.

In the embodiments of the present disclosure, if the width difference is greater than the difference threshold, the electrode plate is scrapped.

In the embodiments of the present disclosure, when a production winding mandrel of a machine table rotates, a pulse signal is sent by a PLC to trigger the camera to take images, so as to ensure that the camera operates in real time to acquire images during the traveling process of a positive electrode plate. The image is subjected to a region of interest (ROI) frame edge capture algorithm, the width difference |Δ1| between the inorganic insulating layers on the front and back surfaces is calculated, and whether the width difference is less than the difference threshold is determined. The electrode plate is classified as OK or NG, and the information is transmitted to the electrode plate winding machine via the PLC to perform product scrapping and reinspection processes.

In the embodiments of the present disclosure, with continued reference to FIG. 5, a standard member with a standard width of 1 mm (i.e., the calibration block structure 503) is added to the center of the field of view, and the calibration block structure 503 serves as real-time monitoring of the accuracy (precision) of the camera. When the difference |Δ2| between the width of the calibration block in the image and 1 mm is less than or equal to 0.1 mm, the electrode plate normally enters the electrode plate winding machine for production; and when |Δ2| > 0.1 mm, the device gives an alarm and shuts down, prompting an engineer to maintain the camera.

FIG. 8 is a schematic flowchart of a camera detection method according to an embodiment of the present disclosure. As shown in FIG. 8, the camera detection method is implemented by step S801 to step S805.

In step S801, the camera acquires an image with the calibration block structure.

The camera acquires, in response to a camera detection operation of the controller, the image with the calibration block structure.

In step S802, whether a difference between a width of the calibration block structure in the image and a standard width is less than a calibration threshold is determined.

In the embodiments of the present disclosure, if the difference between the width of the calibration block structure in the image and the standard width is less than or equal to the calibration threshold, step S803 is performed; and if the difference between the width of the calibration block structure in the image and the standard width is greater than the calibration threshold, step S804 is performed.

In step S803, normal production is performed.

In the embodiments of the present disclosure, if the difference between the width of the calibration block structure in the image and the standard width is less than or equal to the calibration threshold, the camera is not adjusted.

In step S804, the electrode plate winding machine gives an alarm and shuts down.

If the difference between the width of the calibration block structure in the image and the standard width is greater than the calibration threshold, the electrode plate winding machine gives an alarm and shuts down, prompting an engineer to maintain the camera.

In step S805, an engineer is prompted to maintain the camera.

In the embodiments of the present disclosure, the difference |Δ2| between the real-time value of the width of the calibration block structure and the actual value 1 mm is calculated and whether the difference is less than the calibration threshold is determined based on the image by the ROI frame edge capture algorithm. The camera is classified as OK or NG according to the result, and the information is transmitted to the electrode plate winding machine through the PLC for shutdown, and an engineer is prompted to perform device maintenance.

In some embodiments, after the device has been repaired, step S801 continues to be performed.

In the embodiments of the present disclosure, an area array camera may also be used for continuous photographing. In visual imaging, in addition to monitoring the consistency of the width of the inorganic substance at the edge of the positive electrode plate, the lateral offset |Δ3| of the electrode plate during traveling may also be monitored synchronously. When |Δ3| ≤ 0.5 mm, normal production is performed; and when |Δ3| > 0.5 mm, a shutdown for maintenance is performed.

In the embodiments of the present disclosure, artificial intelligence (AI) monitoring may be introduced for a real-time image acquisition system of the camera. When defects such as wrinkles or damage occur on the front and back surfaces of the positive electrode plate, AI can detect and intercept the electrode plate, thereby ensuring that the cells are all produced from normal and non-defective materials.

In one aspect, the embodiments of the present disclosure monitor the consistency of the front and back surfaces of the edge of the electrode plate, which is more accurate compared with monitoring the edge of the electrode plate by a traditional alignment degree detection system. The embodiment of the present disclosure greatly eliminates the interference of the inorganic insulating layer region and more accurately monitors the alignment degree of the positive and negative electrode plates, thereby effectively ensuring that the negative electrode plate covers the active region of the positive electrode plate, reducing cell problems caused by the alignment degree, and ensuring the safety of the cell. In another aspect, the introduction of the calibration block structure to monitor the camera precision can effectively monitor distortions in the electrode plate alignment degree detection caused by algorithm abnormalities, resolution anomalies, and hardware loosening of the camera, thereby ensuring normal operation of the device during production and effectively reducing false detections and missed detections of the detection system.

In the embodiments of the present disclosure, whether the edge of the electrode plate is offset relative to an initial position is also monitored by the CCD camera. Compared with the detection method in the related art in which whether the initial position is offset is determined by a sensor, the method according to the present disclosure improves the detection precision from 1.5 mm to 0.5 mm, thereby improving the detection precision and reducing false detections and missed detections.

In the embodiments of the present disclosure, in addition to satisfying the functions of detecting the edge consistency and position stability of the electrode plate, an undesirable-appearance detection algorithm may be added to the camera to perform appearance detection on the insulating layer and the active region at the edge of the positive electrode plate, thereby further ensuring the quality and safety of the cell.

It should be noted that the description of the system in the embodiments of the present disclosure is similar to the description of the above method embodiments, and has beneficial effects similar to those of the method embodiments, and therefore is not repeated herein. Technical details that are not disclosed in the system embodiments can be understood with reference to the description of the method embodiments of the present disclosure.

The above describes only embodiments of the present disclosure and is not intended to limit the protection scope of the present disclosure. Any modifications, equivalent substitutions, improvements, and the like made within the spirit and scope of the present disclosure all fall within the protection scope of the present disclosure.

### INDUSTRIAL APPLICABILITY

In the embodiments of the present disclosure, by obtaining the images of the first surface and the second surface of the electrode plate, the dimensional parameters of the detection target of the electrode plate on the first surface and the second surface are determined, and the consistency of the detection target on the front and back surfaces of the electrode plate is monitored based on the dimensional parameters of the detection target on the first surface and the second surface, thereby reducing the problem of misalignment of the detection target on the front and back surfaces of the electrode plate. In this way, the alignment degree of the detection target on the front and back surfaces of the electrode plate is ensured on the basis that edges of positive and negative electrode plates are aligned, such that the negative electrode plate can cover an active region of the positive electrode plate when the electrode plates are wound, thereby reducing the case of unusable cells due to the misalignment of detection targets of positive and negative electrodes, more accurately monitoring the alignment degree of the positive and negative electrode plates during winding, and ensuring the yield and use safety of the cell.

## Claims

1. An electrode plate detection method, applied to a camera system, the electrode plate detection method comprising:
obtaining, before an electrode plate is wound, a first image of a first surface of the electrode plate and a second image of a second surface of the electrode plate that are acquired by an image acquisition element;
determining, according to the first image, a dimensional parameter of a detection target in the electrode plate on a first surface, and determining, according to the second image, a dimensional parameter of a detection target in the electrode plate on a second surface, wherein the detection target at least comprises a calibration block corresponding to an electrode plate, and the calibration block is configured to determine whether the image acquisition element is offset; and
determining, based on the dimensional parameter of the first surface and the dimensional parameter of the second surface, a detection result of the electrode plate.

2. The electrode plate detection method according to claim 1, wherein the detection target further comprises a coating of the electrode plate;
determining, according to the first image, the dimensional parameter of the detection target in the electrode plate on the first surface, and determining, according to the second image, the dimensional parameter of the detection target in the electrode plate on the second surface comprises:
determining, according to the first image, a coating width of the coating on the first surface; and
determining, based on the second image, a coating width of the coating on the second surface;
correspondingly, determining, based on the dimensional parameter of the first surface and the dimensional parameter of the second surface, the detection result of the electrode plate comprises:
determining, based on the coating width of the first surface and the coating width of the second surface, a coating width difference of the coating between the first surface and the second surface; and
comparing the coating width difference with a target difference threshold to obtain an alignment degree result of the coating on the first surface and the second surface.

3. The electrode plate detection method according to claim 2, wherein comparing the coating width difference with the target difference threshold to obtain the alignment degree result of the coating on the first surface and the second surface comprises:
generating, in response to the coating width difference being greater than or equal to the target difference threshold, a first alignment degree result indicating that the electrode plate does not satisfy an alignment degree condition; and
generating, in response to the coating width difference being less than the target difference threshold, a second alignment degree result indicating that the electrode plate satisfies the alignment degree condition.

4. The electrode plate detection method according to any one of claims 1 to 3, wherein the image acquisition element comprises a first image acquisition element for acquiring the first image and a second image acquisition element for acquiring the second image;
determining, according to the first image, the dimensional parameter of the detection target in the electrode plate on the first surface, and determining, according to the second image, the dimensional parameter of the detection target in the electrode plate on the second surface comprises:
determining, according to the first image, a calibration width of the calibration block on the first surface, and determining, according to the second image, a calibration width of the calibration block on the second surface;
correspondingly, the method further comprises:
determining a difference between the calibration width of the first surface and a standard width of the calibration block and a difference between the calibration width of the second surface and the standard width of the calibration block, separately, to obtain a first calibration difference and a second calibration difference; and
comparing the first calibration difference and the second calibration difference with a calibration difference threshold, separately, to obtain an offset result of the first image acquisition element and an offset result of the second image acquisition element.

5. The electrode plate detection method according to any one of claims 1 to 4, wherein determining, according to the first image, the dimensional parameter of the detection target in the electrode plate on the first surface, and determining, according to the second image, the dimensional parameter of the detection target in the electrode plate on the second surface comprises:
determining, according to the first image and the second image, a first defect on the first surface, a second defect on the second surface, an area of the first defect, and an area of the second defect;
correspondingly, determining, based on the dimensional parameter of the first surface and the dimensional parameter of the second surface, the detection result of the electrode plate comprises:
generating, in response to the area of the first defect and/or the area of the second defect being greater than a defect area threshold, a detection result indicating that the electrode plate has a defect;
generating, in response to both the area of the first defect and the area of the second defect being less than or equal to the defect area threshold, a detection result indicating that the electrode plate is capable of being wound.

6. The electrode plate detection method according to any one of claims 1 to 5, wherein the electrode plate detection method further comprises:
determining, according to the first image or the second image, a vertical distance between an electrode plate boundary and a reference point; and
generating, in response to a difference between the vertical distance and a standard distance being greater than a distance threshold, an electrode plate offset result indicating that the electrode plate is offset from an electrode plate conveying direction.

7. The electrode plate detection method according to any one of claims 1 to 6, wherein obtaining the first image of the first surface of the electrode plate and the second image of the second surface of the electrode plate that are acquired by the image acquisition element comprises:
obtaining, in response to a trigger signal sent by a controller, the first image of the first surface of the electrode plate and the second image of the second surface of the electrode plate that are acquired by the image acquisition element;
the electrode plate detection method further comprises:
sending the detection result of the electrode plate to the controller.

8. An electrode plate detection system, the electrode plate detection system at least comprising a camera system, the camera system comprising:
an image acquisition element, configured to acquire, before an electrode plate is wound, a first image of a first surface of the electrode plate and a second image of a second surface of the electrode plate; and
a processor, connected to the image acquisition element, wherein the processor is configured to determine, according to the first image, a dimensional parameter of a detection target in the electrode plate on a first surface, and determine, according to the second image, a dimensional parameter of a detection target in the electrode plate on a second surface, wherein the detection target at least comprises a calibration block corresponding to an electrode plate, and the calibration block is configured to determine whether the image acquisition element is offset; and determine, based on the dimensional parameter of the first surface and the dimensional parameter of the second surface, a detection result of the electrode plate.

9. The electrode plate detection system according to claim 8, wherein the electrode plate detection system further comprises:
a mounting frame, configured to mount a first image acquisition element and a second image acquisition element, wherein in a conveying direction perpendicular to an electrode plate, the first image acquisition element and the second image acquisition element are disposed on two sides of the electrode plate, respectively;
a first light source and a second light source, providing illumination for the electrode plate;
a first support, disposed between the first image acquisition element and the first surface; and a second support, disposed between the second image acquisition element and the second surface,
wherein a field-of-view hole of the first support corresponds to a field-of-view hole of the second support, and a first image acquisition element and a second image acquisition element perform image acquisition on the electrode plate through the field-of-view hole to obtain a first image and the second image.

10. The electrode plate detection system according to claim 9, wherein the electrode plate detection system further comprises:
calibration blocks disposed on the first support and the second support, respectively.

11. The electrode plate detection system according to any one of claims 8 to 10, wherein the electrode plate detection system further comprises:
a controller, the controller being electrically connected to the processor and being configured to: send, in response to the electrode plate winding machine starting to operate, a trigger signal to a camera system, receive a detection result of an electrode plate sent by the camera system, and send the detection result of the electrode plate to the electrode plate winding machine; and
the electrode plate winding machine, electrically connected to the controller and configured to perform, in response to the detection result, one of the following processes on the electrode plate: winding, reinspection, and scrapping.
